# FASCICULE DE BREVET EUROPEEN

(11) **EP 3 774 525 B1**
(45) Date de publication et mention de la délivrance du brevet: **28.06.2023**
(21) Numéro de dépôt: 19716209.2
(22) Date de dépôt: 12.04.2019
(51) Int. Cl.: B63H 23/24, B63G 8/08, B63H 21/17

(54) **SYSTÈME D'ALIMENTATION EN ÉNERGIE ÉLECTRIQUE D'UN SOUS-MARIN À PROPULSION CONVENTIONNELLE**
SYSTEM ZUR VERSORGUNG EINES KONVENTIONELL ANGETRIEBENEN UNTERSEEBOOTES MIT ELEKTRISCHER ENERGIE
SYSTEM FOR SUPPLYING ELECTRICAL ENERGY TO A CONVENTIONALLY POWERED SUBMARINE

(30) Priorité: 12.04.2018 FR 1800302
(43) Date de publication de la demande: 17.02.2021
(73) Titulaire: Naval Group, 75015 Paris (FR)
(72) Inventeur: ROUE, Laurent, 56311 LORIENT (FR); LE BRETON, Stéphane, 56311 LORIENT (FR)
(74) Mandataire: Lavoix
(86) Numéro de dépôt international: PCT/EP2019/059557
(87) Numéro de publication internationale: WO 2019/197667

(56) Documents cités:
- EP-A2- 1 484 243
- EP-A2- 1 918 192
- EP-A2- 2 108 582
- WO-A1-87/04303
- WO-A1-2016/207475
- GB-A- 168 834
- GB-A- 191 512 444

## Description

La présente invention concerne un système d'alimentation en énergie électrique d'un sous-marin à propulsion conventionnelle.

Dans la présente demande, on parle de sous-marin à propulsion conventionnelle par opposition à un sous-marin à propulsion nucléaire.

En effet, les systèmes d'alimentation de ces deux types de navires sont complètement différents.

On sait que dans les sous-marins à propulsion conventionnelle, les systèmes d'alimentation en énergie électrique comportent des moyens de production d'énergie électrique, des moyens de stockage et de conversion d'énergie électrique, des moyens de propulsion à basse vitesse, des moyens de propulsion à haute vitesse et des moyens de distribution d'énergie électrique à des abonnés à travers au moins un réseau de bord du sous-marin.

De façon générale au moins deux réseaux de bord sont utilisés dans ce type de navires.

Dans des sous-marins de ce type, les moyens de production d'énergie électrique peuvent comporter des moyens de production aérobie et des moyens de production anaérobie.

Ce type de systèmes a été développé pour améliorer les performances des sous-marins.

De façon classique, ces moyens de production d'énergie électrique sont raccordés en sortie, à un réseau à courant continu d'alimentation en énergie électrique du sous-marin.

Ce réseau est également relié à des moyens de stockage d'énergie électrique constitués par exemple par des batteries.

Ce réseau d'alimentation et ces moyens de stockage d'énergie électrique sont alors conçus pour alimenter, en sortie, les moyens de propulsion et les réseaux de bord du sous-marin.

On conçoit que ce ou ces réseaux d'alimentation à courant continu constituent alors le réseau de force et le noeud central du système d'énergie/propulsion du sous-marin.

Ce ou ces réseaux d'alimentation à courant continu doivent donc être dimensionnés pour recevoir et distribuer des flux d'énergie depuis des sources de production jusqu'aux moyens de stockage et depuis ces moyens de stockage vers les différents consommateurs.

Mais, par conception, ce noeud central ne peut pas répondre simplement à l'ensemble des exigences d'intégration et de performance, car certaines d'entre elles imposent des limites.

Ainsi par exemple, il est difficile de trouver un optimum entre un bon rendement des moyens de propulsion à basse vitesse et leur capacité à engendrer une puissance permettant d'atteindre les hautes vitesses.

De même il est difficile d'obtenir de bonnes performances de rendement pour certains composants de faible puissance, alors que le réseau est dimensionné en tension pour fournir une puissance maximale de propulsion.

Le courant maximal de charge des moyens de production d'énergie électrique peut également ne pas être atteint à cause des limitations en courant des moyens de stockage.

Ainsi par exemple, les batteries au plomb ont une limite de courant de charge qui peut être rapidement atteinte.

Réciproquement, les moyens de stockage ne sont pas non plus chargés à leur courant maximal car les moyens de production d'énergie électrique ne peuvent pas générer celui-ci.

La tension du réseau de puissance peut également être limitée par des caractéristiques de l'appareillage de protection associé à ceux-ci et qui est strictement nécessaire pour protéger les artères de ce réseau à courant continu.

Les calibres et les niveaux des courants de court-circuit des systèmes de protection sont en effet limités, ce qui ne permet pas toujours de mettre en parallèle les différentes sources et moyens de stockage.

Un système d'alimentation en énergie électrique d'un sous-marin avec deux réseaux d'alimentation est décrit par le document EP1484243. Les deux réseaux d'alimentation sont séparés les uns des autres et sont connectés alternativement en cas d'urgence (panne). Le système comprend des moyens de production d'énergie électrique, des moyens de stockage et de conversion d'énergie électrique, et des moyens de propulsion, selon le préambule de la revendication 1.

Le but de l'invention est donc de résoudre ces problèmes en proposant une nouvelle architecture de réseau électrique, permettant d'optimiser les performances en autonomie, taux d'indiscrétion, disponibilité d'énergie, etc... et de diminuer les volumes d'intégration correspondants.

A cet effet l'invention a pour objet un système d'alimentation en énergie électrique d'un sous-marin à propulsion conventionnelle selon la revendication 1.

Suivant d'autres caractéristiques du système selon l'invention, le système d'alimentation est selon l'une quelconque des revendications 2 à 8.

L'invention sera mieux comprise à la lecture de la description qui va suivre, donnée uniquement à titre d'exemple et faite en se référant aux dessins annexés, sur lesquels :
- la figure 1 représente un schéma synoptique illustrant l'architecture d'un système d'alimentation en énergie électrique d'un sous-marin à propulsion conventionnelle, de l'état de la technique, et
- les figures 2 et 3 représentent des schémas synoptiques illustrant la structure et le fonctionnement d'un système d'alimentation en énergie électrique d'un sous-marin à propulsion conventionnelle, selon l'invention.

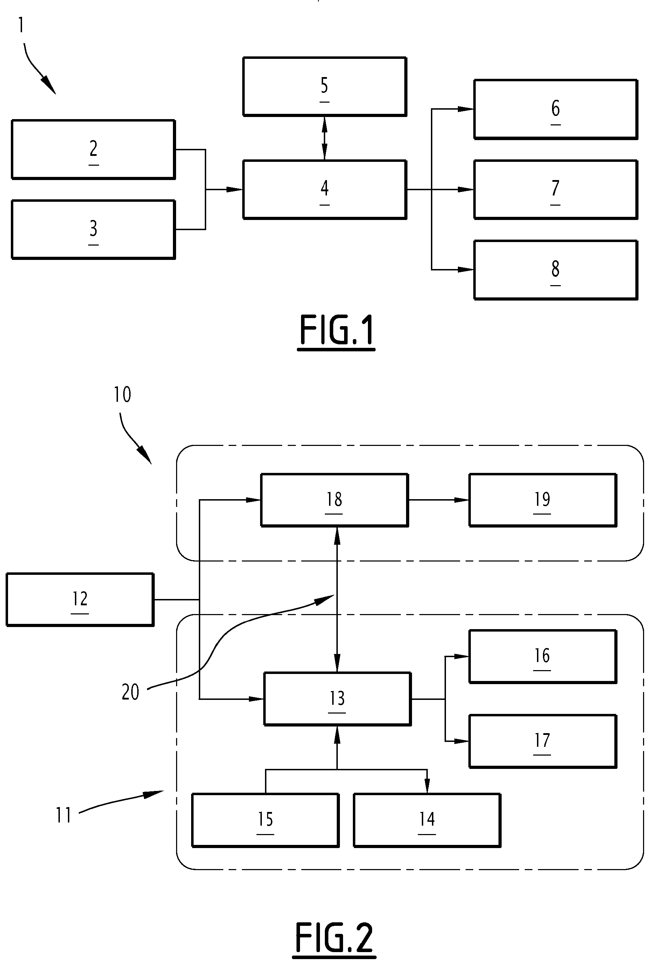

On a en effet illustré sur la figure 1, un système d'alimentation en énergie électrique d'un sous-marin à propulsion conventionnelle de l'état de la technique.

Celui-ci comporte de façon classique des moyens de production d'énergie électrique qui sont désignés par la référence générale 1 sur cette figure.

Ces moyens de production d'énergie électrique 1 peuvent comporter des moyens de production aérobie désignés par la référence générale 2 et des moyens de production anaérobie désignés par la référence générale 3.

Ces types de moyens de production aérobie et anaérobie sont bien connus dans l'état de la technique et ne seront donc pas décrits plus en détails par la suite.

Dans cette architecture, ces moyens de production d'énergie électrique sont raccordés à un réseau à courant continu désigné par la référence générale 4.

Ce réseau à courant continu est associé à des moyens de stockage d'énergie désignés par la référence générale 5.

Ces moyens comprennent par exemple des batteries.

En sortie, ce réseau à courant continu 4 est adapté pour alimenter des moyens de propulsion à basse vitesse désignés par la référence générale 6, des moyens de propulsion à haute vitesse désignés par la référence générale 7 et des moyens de distribution d'énergie électrique à des abonnés, à travers au moins un réseau de bord désigné par la référence générale 8.

Comme cela a été indiqué précédemment, le réseau à courant continu désigné par la référence générale 4 constitue, dans ces systèmes, le noeud central du système et se traduit par les limitations décrites.

Comme cela a été indiqué précédemment, la présente invention se propose de résoudre ces problèmes.

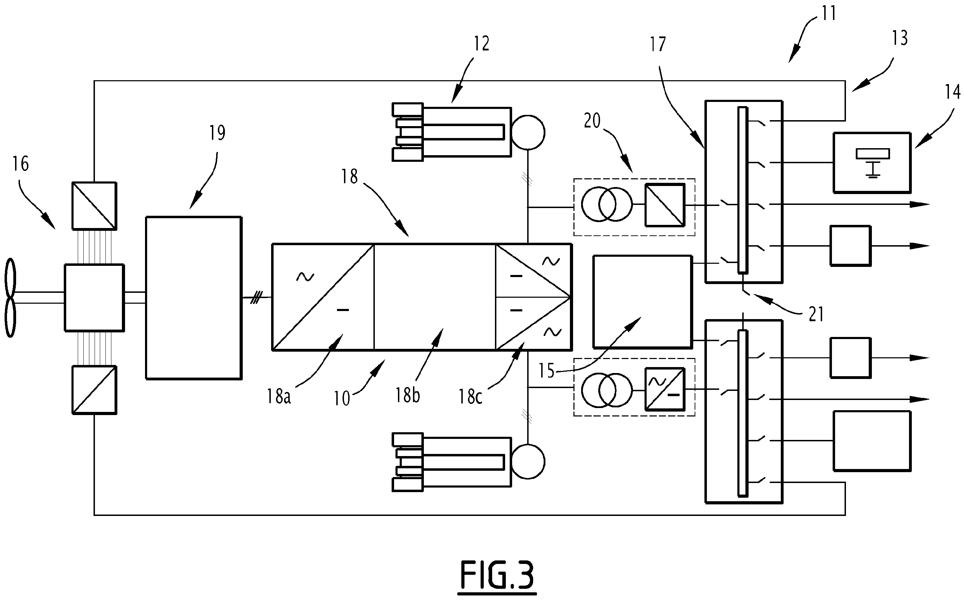

A cet effet l'invention propose une nouvelle structure de système d'alimentation, décrite en regard des figures 2 et 3.

En fait et comme cela est visible par exemple sur la figure 2, le système d'alimentation en énergie électrique selon l'invention comporte au moins deux parties de circuit en parallèle.

Ces parties de circuit sont désignées par les références générales 10 et 11 sur cette figure 2.

Ces deux parties de circuit sont connectées par exemple en parallèle en sortie de moyens de production aérobie d'énergie électrique désignés par la référence générale 12 sur cette figure.

En fait ces moyens de production aérobie d'énergie électrique permettent alors d'alimenter une partie de circuit de haute puissance 10, pour alimenter les moyens de propulsion à haute vitesse du sous-marin et une partie de basse puissance 11 pour alimenter les moyens de propulsion à basse vitesse de celui-ci et les moyens de distribution d'énergie électrique à bord de ce sous-marin.

Ceci est par exemple illustré sur ces figures 2 et 3, dans lesquelles on reconnaît dans la partie de circuit à basse puissance 11, un réseau à courant continu désigné par la référence générale 13, raccordé en sortie des moyens de production aérobie d'énergie électrique 12.

Ce réseau à courant continu désigné par la référence générale 13 est associé d'une part, à des moyens de stockage d'énergie électrique désignés par la référence générale 14 et d'autre part, à des moyens de production d'énergie électrique anaérobie désignés par la référence générale 15.

Le réseau électrique à courant continu 13 est alors adapté pour alimenter des moyens de propulsion à basse vitesse 16 du sous-marin et des moyens de distribution d'énergie électrique 17 dans celui-ci.

On conçoit alors que les moyens de production anaérobie d'énergie électrique 15 sont intégrés dans la partie de circuit de basse puissance du système d'alimentation selon l'invention.

Les moyens de propulsion du sous-marin comportent alors par exemple deux moteurs électriques, dont l'un dit de croisière permet d'atteindre les basses vitesses et l'autre dit de puissance permet d'atteindre les hautes vitesses du sous-marin.

Le moteur électrique dit de croisière est donc le moteur constituant les moyens de propulsion 16 décrits sur cette figure 2.

La partie de circuit à haute puissance 10 comporte quant à elle des moyens formant convertisseur courant alternatif/courant continu, des moyens de stockage d'énergie électrique et des moyens de conversion courant continu/courant alternatif, désignés par la référence générale 18 sur ces figures 2 et 3, et qui sont décrits plus en détail par la suite.

Ces moyens 18 permettent alors d'alimenter en énergie, un moteur électrique de puissance permettant d'atteindre les hautes vitesses du sous-marin, également appelé « booster » dans l'état de la technique et désigné par la référence générale 19 sur ces figures 2 et 3.

Bien entendu des moyens de couplage de ces deux parties de circuit peuvent également être envisagés, ces moyens de couplage étant schématisés par la ligne désignée par la référence générale 20 sur cette figure 2.

Ceux-ci seront décrits plus en détail par la suite.

On a illustré de façon un peu plus détaillée une telle structure de système d'alimentation sur la figure 3.

On reconnaît en effet sur cette figure 3, la partie de circuit de haute puissance désignée par la référence générale 10, la partie de circuit de basse puissance désignée par la référence générale 11, et les moyens de production aérobie d'énergie électrique désignés par la référence générale 12.

On reconnaît également sur cette figure 3, le réseau à courant continu 13, les moyens de stockage d'énergie 14, les moyens de production anaérobie 15 et le moteur électrique de croisière 16.

On reconnaît également sur cette figure 3, les moyens de distribution 17 et les moyens formant convertisseur et de stockage d'énergie électrique 18.

Ceux-ci comportent en fait trois parties en série en sortie des moyens de production aérobie 12, ces trois parties étant successivement des moyens formant convertisseur courant alternatif/courant continu 18a, des moyens de stockage 18b et des moyens formant convertisseur courant continu/courant alternatif 18c en série, et permettant d'alimenter les moyens de propulsion à haute vitesse 19.

Ceux-ci comportent par exemple un moteur de puissance permettant d'atteindre les hautes vitesses du sous-marin.

Les moyens de couplage sont toujours quant à eux désignés par la référence générale 20 sur cette figure 3 et comportent par exemple des moyens de conversion et de transformation d'énergie permettant d'assurer le découplage et l'isolation galvanique entre les deux parties de circuit.

En fait et comme cela est illustré, le système d'alimentation peut être doublé de façon classique.

Il peut en effet comporter deux portions de circuit en parallèle à savoir deux moyens de production aérobie d'énergie électrique, deux réseaux de bord raccordés à la sortie des moyens de production anaérobie, deux moyens de stockage d'énergie électrique pour la partie de basse puissance et deux moyens de couplage permettant d'associer les différents moyens de production d'énergie au réseau.

De même et comme cela est illustré, les deux réseaux électrique 13 peuvent être associés à des moyens de couplage désignés par la référence générale 21 sur cette figure 3.

On conçoit alors qu'une telle structure de circuit à haute puissance est optimisée en volume et masse dans la mesure où le réseau à courant continu n'a plus à transférer une grande quantité d'énergie permettant d'atteindre par exemple la vitesse maximale de propulsion du sous-marin.

Le réseau à haute puissance est alors remplacé par un moyen de conversion stockage/recharge ce qui permet de réduire de manière substantielle les liaisons électriques entre composants et se traduit par une minimisation du nombre de disjoncteurs par exemple à courant continu de calibre élevé, qui sont, par nature, extrêmement volumineux et coûteux.

La tension du réseau à courant continu peut également être réduite à une valeur permettant d'optimiser le rendement global des abonnés.

Les courants qui circulent dans ce réseau à courant continu étant plus faibles que dans une architecture classique, on peut également s'affranchir des contraintes dimensionnelles des organes de protection.

Grâce à une telle structure, il est également possible d'avoir une ségrégation des deux domaines de puissance.

En effet l'architecture proposée assure un niveau élevé de sécurité et de disponibilité.

En effet les moyens de transformation et de conversion alternatif/continu désignés par la référence générale 20, permettent d'assurer l'isolement galvanique entre le domaine à haute puissance et le domaine à faible puissance.

Ceci permet de simplifier la problématique de sélectivité des réseaux électriques.

Bien entendu l'ensemble des organes entrant dans la constitution d'une telle structure peut être optimisé en dimensionnement.

Enfin d'autres modes de réalisation encore peuvent être envisagés.

Le réseau à haute puissance est alors remplacé par un moyen de conversion stockage/recharge ce qui permet de réduire de manière substantielle les liaisons électriques entre composants et se traduit par une minimisation du nombre de disjoncteurs par exemple à courant continu de calibre élevé, qui sont, par nature, extrêmement volumineux et coûteux.

La tension du réseau à courant continu peut également être réduite à une valeur permettant d'optimiser le rendement global des abonnés.

Les courants qui circulent dans ce réseau à courant continu étant plus faibles que dans une architecture classique, on peut également s'affranchir des contraintes dimensionnelles des organes de protection.

Grâce à une telle structure, il est également possible d'avoir une ségrégation des deux domaines de puissance.

En effet l'architecture proposée assure un niveau élevé de sécurité et de disponibilité.

En effet les moyens de transformation et de conversion alternatif/continu désignés par la référence générale 20, permettent d'assurer l'isolement galvanique entre le domaine à haute puissance et le domaine à faible puissance.

Ceci permet de simplifier la problématique de sélectivité des réseaux électriques.

Bien entendu l'ensemble des organes entrant dans la constitution d'une telle structure peut être optimisé en dimensionnement.

Enfin d'autres modes de réalisation encore peuvent être envisagés tel que défini par les revendications.

## Revendications

1. Système d'alimentation en énergie électrique d'un sous-marin à propulsion conventionnelle, du type comportant des moyens (12, 15) de production d'énergie électrique, des moyens (14, 18) de stockage et de conversion d'énergie électrique, des moyens (16) de propulsion à basse vitesse, des moyens (19) de propulsion à haute vitesse et des moyen (17) de distribution d'énergie électrique à des abonnés à travers au moins un réseau de bord, **caractérisé en ce qu'**il comporte au moins deux parties de circuit en parallèle (10, 11) en sortie des moyens de production d'énergie électrique, l'une (10) de haute puissance pour alimenter les moyens de propulsion à haute vitesse (19) et l'autre de basse puissance (11) pour alimenter les moyens de propulsion à basse vitesse (16) et les moyens de distribution d'énergie (17), dans lequel la haute puissance est supérieure à la basse puissance,
et **en ce que** la partie de circuit à haute puissance (10) comporte des moyens formant convertisseur courant alternatif/courant continu (18a), des moyens de stockage d'énergie électrique (18b) et des moyens de conversion courant continu/courant alternatif (18c) en série.

2. Système d'alimentation selon la revendication 1, **caractérisé en ce que** chaque partie de circuit (10, 11) comporte des moyens de stockage d'énergie électrique (14, 18).

3. Système d'alimentation selon la revendication 2, **caractérisé en ce que** les moyens de production d'énergie électrique comportent des moyens de production aérobie (12) et des moyens de production anaérobie (15) d'énergie électrique et **en ce que** les deux parties de circuit en parallèle (10, 11) sont raccordées en sortie des moyens de production aérobie d'énergie électrique (12).

4. Système d'alimentation selon la revendication 3, **caractérisé en ce que** les moyens de production anaérobie (15) d'énergie électrique sont intégrés dans la partie de circuit de basse puissance (11).

5. Système d'alimentation selon l'une quelconques des revendications précédentes, **caractérisé en ce que** les moyens de propulsion comprennent des moteurs électriques, l'un de croisière (16) pour atteindre les basses vitesses et l'autre de puissance (19) pour atteindre les hautes vitesses.

6. Système d'alimentation selon l'une quelconque des revendications précédentes, **caractérisé en ce que** les moyens de production aérobie d'énergie électrique (12) sont également reliés à la partie de circuit de basse puissance (10) à travers des moyens (20) de transformation et de conversion courant alternatif/courant continu.

7. Système d'alimentation selon la revendication 6, **caractérisé en ce que** la partie de circuit de basse puissance (11) comporte au moins un réseau (13) à courant continu raccordé en sortie des moyens de production aérobie (12), en sortie des moyens de production anaérobie (15), à des moyens de stockage d'énergie électrique (14), aux moyens de propulsion à basse vitesse (16) et aux moyens de distribution d'énergie (17).

8. Système d'alimentation selon l'une quelconque des revendications précédentes, **caractérisé en ce que** les moyens de distribution d'énergie (17) sont adaptés pour alimenter deux réseaux de bord en parallèle, et associés par des moyens de couplage (21).

## Patentansprüche

1. Elektrisches Energieversorgungssystem für ein konventionell angetriebenes Unterseeboot des Typs, umfassend Einrichtungen (12, 15) zum Erzeugen elektrischer Energie, Einrichtungen (14, 18) zum Speichern und Umwandeln von elektrischer Energie, Einrichtungen (16) zum Antreiben mit niedriger Geschwindigkeit, Einrichtungen (19) zum Antreiben mit hoher Geschwindigkeit und Einrichtungen (17) zum Verteilen der elektrischen Energie an Verbraucher über mindestens ein Bordnetz, **dadurch gekennzeichnet, dass** es mindestens zwei parallele Schaltungsteile (10, 11) am Ausgang der Einrichtungen zum Erzeugen elektrischer Energie umfasst, einen (10) mit hoher Leistung, um die Einrichtungen zum Antreiben mit hoher Geschwindigkeit (19) zu versorgen, und einen mit hoher Leistung (11), um die Einrichtungen zum Antreiben mit niedriger Geschwindigkeit (16) und die Einrichtungen zur Energieverteilung (17) zu versorgen, wobei die hohe Leistung höher ist als die niedrige Leistung, und dass der Hochleistungsschaltungsteil (10) Einrichtungen, die einen Wechselstrom/Gleichstrom-Wandler (18a) bilden, Einrichtungen zum Speichern elektrischer Energie (18b) und Einrichtungen zum Umwandeln von Gleichstrom/Wechselstrom (18c) in Reihe umfasst.

2. Versorgungssystem nach Anspruch 1, **dadurch gekennzeichnet, dass** jeder Schaltungsteil (10, 11) Einrichtungen zum Speichern elektrischer Energie (14, 18) umfasst.

3. Versorgungssystem nach Anspruch 2, **dadurch gekennzeichnet, dass** die Einrichtungen zum Erzeugen elektrischer Energie Einrichtungen zur aeroben Erzeugung (12) und Einrichtungen zur anaeroben Erzeugung (15) elektrischer Energie umfassen und dass die zwei parallelen Schaltungsteile (10, 11) am Ausgang der Einrichtungen zur aeroben Erzeugung elektrischer Energie (12) angeschlossen sind.

4. Versorgungssystem nach Anspruch 3, **dadurch gekennzeichnet, dass** die Einrichtungen zur anaeroben Erzeugung (15) von elektrischer Energie in den Niederleistungsschaltungsteil (11) integriert sind.

5. Versorgungssystem nach einem der vorherigen Ansprüche, **dadurch gekennzeichnet, dass** die Antriebseinrichtungen Elektromotoren umfassen, einen Reisemotor (16) zum Erreichen niedriger Geschwindigkeiten und einen Leistungsmotor (19) zum Erreichen hoher Geschwindigkeiten.

6. Versorgungssystem nach einem der vorherigen Ansprüche, **dadurch gekennzeichnet, dass** die Einrichtungen zur aeroben Erzeugung elektrischer Energie (12) auch über Einrichtungen (20) zur Transformation und Umwandlung von Wechselstrom in Gleichstrom mit dem Niederleistungsschaltungsteil (10) verbunden sind.

7. Versorgungssystem nach Anspruch 6, **dadurch gekennzeichnet, dass** der Niederleistungsschaltungsteil (11) mindestens ein Gleichstromnetz (13) umfasst, das am Ausgang der Einrichtungen zur aeroben Erzeugung (12), am Ausgang der Einrichtungen zur anaeroben Erzeugung (15), an Einrichtungen zum Speichern elektrischer Energie (14), an Einrichtungen zum Antreiben mit niedriger Geschwindigkeit (16) und an die Einrichtungen zur Energieverteilung (17) angeschlossen ist.

8. Versorgungssystem nach einem der vorherigen Ansprüche, **dadurch gekennzeichnet, dass** die Einrichtungen zur Energieverteilung (17) angepasst sind, um zwei Bordnetze parallel zu versorgen, und durch Kopplungseinrichtungen (21) verbunden sind.

## Claims

1. - Electric power supply system for a conventionally propelled submarine, of the type comprising means (12, 15) for producing electric power, means (14, 18) for storing and converting electric power, means (16) for low-speed propulsion, means (19) for high-speed propulsion and means (17) for distributing electric power to subscribers through at least one on-board network **characterised in that** it comprises at least two parallel circuit parts (10, 11) at the output of the electrical energy production means, one (10) of high power for supplying the high-speed propulsion means (19) and the other of low power (11) for supplying the low-speed propulsion means (16) and the energy distribution means (17), in which the high power is greater than the low power, and **in that** the high power circuit portion (10) comprises AC/DC converter means (18a), electrical energy storage means (18b) and DC/AC conversion means (18c) in series.

2. - The power system of claim 1, **characterised in that** each circuit portion (10, 11) comprises electrical energy storage means (14, 18).

3. - A power system according to claim 2, **characterised in that** the electrical energy generating means comprises aerobic (12) and anaerobic (15) electrical energy generating means and that the two parallel circuit parts (10, 11) are connected to the output of the aerobic electrical energy generating means (12).

4. - The power system according to claim 3, **characterised in that** the anaerobic power generation means (15) is integrated in the low power circuit portion (11).

5. - A power system according to any of the preceding claims, **characterised in that** the propulsion means comprise electric motors, one cruising (16) to achieve low speeds and the other power (19) to achieve high speeds.

6. - A power system according to any one of the preceding claims, **characterised in that** the aerobic electrical power generation means (12) are also connected to the low power circuit portion (10) through AC/DC conversion and transformation means (20).

7. - A power system according to claim 6, **characterised in that** the low power circuit portion (11) comprises at least one DC network (13) connected at the output of the aerobic production means (12), at the output of the anaerobic production means (15), to electrical energy storage means (14), to the low speed propulsion means (16) and to the distribution means (17).

8. - A power system according to any of the preceding claims, **characterised in that** the power distribution means (17) are adapted to supply two on-board networks in parallel, and associated by coupling means (21).
